# EUROPÄISCHE PATENTSCHRIFT

(11) **EP 3 176 024 B1**
(45) Veröffentlichungstag und Bekanntmachung des Hinweises auf die Patenterteilung: **14.10.2020**
(21) Anmeldenummer: 16201671.1
(22) Anmeldetag: 01.12.2016
(51) Int. Cl.: B60L 53/12, B60L 53/35, B60L 55/00, B60L 53/60, B60L 53/38, B60L 53/14, B60L 53/16, B60L 53/37, B60L 53/30

(54) **KOPPELMODUL ZUR ÜBERTRAGUNG VON ENERGIE AN EINEM KRAFTFAHRZEUG, KRAFTFAHRZEUG MIT EINEM SOLCHEN KOPPELMODUL SOWIE ENERGIEÜBERTRAGUNGSSYSTEM ZUR ÜBERTRAGUNG VON ENERGIE FÜR EIN KRAFTFAHRZEUG**
COUPLING MODULE FOR THE TRANSMISSION OF ENERGY ON A MOTOR VEHICLE, MOTOR VEHICLE WITH SUCH A COUPLING MODULE AND ENERGY TRANSMISSION SYSTEM FOR TRANSMISSION OF ENERGY FOR A MOTOR VEHICLE
MODULE DE COUPLAGE DESTINÉ AU TRANSFERT D'ÉNERGIE À UN VÉHICULE AUTOMOBILE, VÉHICULE AUTOMOBILE COMPRENANT UN TEL MODULE DE COUPLAGE ET SYSTÈME DE TRANSFERT D'ÉNERGIE POUR UN VÉHICULE AUTOMOBILE

(30) Priorität: 04.12.2015 DE 102015015698
(43) Veröffentlichungstag der Anmeldung: 07.06.2017
(73) Patentinhaber: AUDI AG, 85045 Ingolstadt (DE)
(72) Erfinder: Kupfer, Alexander, DE - 68259 Mannheim (DE); Tumm, Hardo, DE - 85053 Ingolstadt (DE); Gkoumas, Ilias, DE - 90425 Nürnberg (DE)

(56) Entgegenhaltungen:
- EP-A1- 2 684 733
- WO-A1-2011/063959
- DE-A1-102009 010 120
- DE-A1-102011 082 092
- DE-A1-102012 208 005
- DE-U1-202009 000 259
- DE-U1-202012 003 577
- US-A1- 2003 162 448
- US-A1- 2011 199 047

## Beschreibung

Die Erfindung betrifft ein Koppelmodul zur Übertragung von Energie an einem Kraftfahrzeug, ein Kraftfahrzeug mit einem solchen Koppelmodul und ein Energieübertragungssystem zur Übertragung von Energie für ein Kraftfahrzeug.

Ein solches Koppelmodul weist eine Steckaufnahme auf, die eingerichtet ist zur Herstellung einer energieübertragenden Wirkverbindung, sowie eine Schutzeinrichtung, die in eine Offenstellung und in eine Geschlossenstellung verlagerbar und eingerichtet ist, um die Steckaufnahme in der Geschlossenstellung vor wenigstens einem Umwelteinfluss zu schützen. Das Koppelmodul kann beispielsweise eine Ladedose oder ein Tankanschluss eines Kraftfahrzeugs sein. Ein derartiges Koppelmodul ist typischerweise seitlich an einem Kraftfahrzeug angeordnet, wobei bisher eine Wirkverbindung zur Zuführung oder Abführung von Energie in ein oder aus einem Kraftfahrzeug typischerweise manuell erfolgt. Dies stellt einen vergleichsweise hohen Aufwand für einen Betreiber des Kraftfahrzeugs dar. Zugleich bedeutet eine Anordnung beispielsweise einer elektrischen Ladedose an einer Fahrzeugseite, einer Fahrzeugfront oder einem Fahrzeugheck einen hohen technischen Aufwand. Ein automatisches System zur Herstellung einer Wirkverbindung zur Übertragung von Energie zu oder von dem Kraftfahrzeug gestaltet sich als schwierig, da beispielsweise ein für die Energieübetragung vorgesehener Roboter unter bestimmten Bedingungen kaum seitlich an dem Fahrzeug vorbei navigieren kann, insbesondere wenn das Fahrzeug in einer engen Garage oder auf einem Parkplatz zwischen benachbarten Fahrzeugen angeordnet ist.

Ein Koppelmodul gemäß dem Oberbegriff des Anspruchs 1 geht aus EP 2 684 733 A1 hervor. Koppelmodule zur Übertragung von Energie an ein Kraftfahrzeug gehen auch aus US 2003/0162448 A1, WO 2011/063959 A1, DE 20 2012 003 577 U1, DE 10 2011 082 092 A1, DE 10 2009 010 120 A1, DE 20 2009 000 259 U1, US 2011/0199047 A1 und DE 10 2012 208 005 A1 hervor.

Der Erfindung liegt die Aufgabe zugrunde, ein Koppelmodul, ein Kraftfahrzeug mit einem solchen Koppelmodul und ein Energieübertragungssystem zur Übertragung von Energie in ein Kraftfahrzeug oder aus einem Kraftfahrzeug zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Koppelmodul der hier angesprochenen Art dadurch weitergebildet wird, dass das Koppelmodul eingerichtet ist zur Anordnung an einer Kraftfahrzeug-Unterseite. An dieser Stelle kann das Koppelmodul mit vergleichsweise geringem technischem Aufwand angeordnet werden. Zugleich ist eine Navigation für eine geeignet eingerichtete, mit dem Koppelmodul zur Energieübertragung verbindbare, automatisierte, Koppeleinrichtung, beispielsweise für einen Laderoboter - worunter auch ein zum Entladen eingerichteter oder geeigneter Roboter verstanden wird -, unter dem Kraftfahrzeug stets ohne weiteres und insbesondere hindernisfrei möglich. Die Navigation stellt sich dadurch einfacher dar, dass eine Verlagerung in Kraftfahrzeug-Hochrichtung quasi vollständig entfallen kann. Lediglich um letztlich eine Steckverbindung zu bewirken, kann eine zumindest teilweise Verlagerung der Koppeleinrichtung auch in Kraftfahrzeug-Hochrichtung vorgesehen sein. Die Möglichkeit einer automatisierten Bereitstellung der Wirkverbindung zur Übertragung von Energie in das oder aus dem Kraftfahrzeug steigert nicht zuletzt den Komfort für einen Betreiber des Kraftfahrzeugs erheblich.

Unter einer Übertragung von Energie wird insbesondere eine Zuführung oder Abführung von Energie verstanden, beispielsweise dass dem Kraftfahrzeug Energie aus einer vorzugsweise externen Quelle zugeführt wird, die bevorzugt selbst nicht Teil des Koppelmoduls, des Kraftfahrzeugs oder des Energieübertragungssystems ist. Es kann sich dabei um chemische Energie, insbesondere in Form eines Brennstoffs, beispielsweise eines flüssigen Brennstoffs oder eines Brenngases, aus einem Tank oder einem Leitungssystem handeln. Alternativ oder zusätzlich kann es sich auch um elektrische Energie handeln, insbesondere um Energie in Form eines Ladestroms aus einer Stromquelle, beispielsweise direkt aus einem Stromnetz oder aus einem Stromspeicher, beispielsweise einem Akkumulator. Im letzten Fall handelt es sich bei dem Kraftfahrzeug bevorzugt um ein zumindest auch elektrisch angetriebenes und aufladbares Kraftfahrzeug, insbesondere um ein Elektrofahrzeug oder ein Fahrzeug mit Hybridantrieb, beispielsweise um ein sogenanntes Plug-in-Hybridfahrzeug. Die Steckaufnahme des Koppelmoduls ist in diesem Fall bevorzugt als elektrische Steckdose ausgebildet, wobei das Koppelmodul insgesamt als Ladedose ausgebildet ist. Unter einer Abführung von Energie wird insbesondere eine Entnahme chemischer Energie, beispielsweise eine Absaugung, oder ein elektrisches Entladen verstanden. Die Möglichkeit, zumindest auch elektrisch angetriebene und aufladbare Kraftfahrzeuge auch entladen zu können, stellt einen wichtigen Baustein in der sich vollziehenden Energiewende dar, wo solche Kraftfahrzeuge als flexible Speichermedien insbesondere zur Zwischenspeicherung von elektrischer Energie genutzt werden können.

Unter einem Kraftfahrzeug wird insbesondere ein selbstfahrendes Fahrzeug verstanden, welches eine Antriebsmaschine, insbesondere einen Motor, aufweist, der eine extern zugeführte Energieform in Bewegungsenergie des Kraftfahrzeugs wandeln kann. Der Motor kann insbesondere als Brennkraftmaschine und/oder als elektrische Maschine ausgebildet sein.

Die Steckaufnahme ist besonders bevorzugt als elektrische Steckdose nach einer zugelassenen Steckernorm gemäß IEC 62196 in der an dem den Zeitrang der vorliegenden Anmeldung bestimmenden Tag gültigen Fassung ausgebildet. Dies ermöglicht die Ausgestaltung der Steckaufnahme als Standardteil, was die Kosten für die Herstellung des Koppelmoduls senkt.

Eine elektrische Steckverbindung stellt eine leistungsübertragende Verbindung mit einem Wirkungsgrad von nahezu 100 % dar. Ein derart ausgebildetes Koppelmodul ermöglicht also eine besonders effiziente Energieübertragung.

Das Koppelmodul ist besonders bevorzugt eingerichtet zur Anordnung an einem Kraftfahrzeug-Unterboden.

Gemäß einer Weiterbildung der Erfindung ist vorgesehen, dass das Koppelmodul ein Gehäuse aufweist, in dem die Steckaufnahme angeordnet ist. Die Schutzeinrichtung ist dabei als Schutzklappe ausgebildet, die das Gehäuse in der Geschlossenstellung verschließt. Dies ermöglicht einen besonders effizienten Schutz der Steckaufnahme vor Umwelteinflüssen, insbesondere vor Nässe, Schmutz, Schnee und dergleichen. Dabei ist das Gehäuse insbesondere so ausgebildet, dass es den Umwelteinflüssen und Belastungen, die unter dem Kraftfahrzeug auftreten, insbesondere während dessen Betriebs, standhält. Vorzugsweise weist das Koppelmodul in dem Gehäuse die Steckaufnahme, eine Sensorik sowie eine Elektronik auf, die durch das Gehäuse vor Umwelteinflüssen geschützt sind. Dabei wird das Gehäuse durch die Schutzklappe insbesondere nach unten geschlossen, wenn diese in ihrer Geschlossenstellung angeordnet ist, wobei die Schutzklappe die Steckaufnahme und gegebenenfalls vorgesehene Sensoren für ein automatisiertes Herstellen einer Wirkverbindung zur Übertragung von Energie in ihrer Offenstellung freigibt. Es ist zusätzlich möglich, dass eine in dem Gehäuse angeordnete Elektronik des Koppelmoduls separat gegen Umwelteinflüsse geschützt ist, beispielsweise durch Eingießen oder Vergießen, sodass das Gehäuse in diesem Fall den Umwelteinflüssen nicht vollständig standhalten muss. So ist es dann beispielsweise unschädlich, wenn Wasser in geringem Umfang in das Gehäuse eintritt, beispielsweise Spritzwasser. Vorzugsweise sind alle Komponenten des Koppelmoduls - mit Ausnahme des Gehäuses selbst - in dem Gehäuse angeordnet.

Gemäß einer Weiterbildung der Erfindung ist vorgesehen, dass die Schutzeinrichtung durch eine mit dem Koppelmodul zur Übertragung von Energie in ein Kraftfahrzeug oder aus einem Kraftfahrzeug zusammenwirkende Koppeleinrichtung verlagerbar ist. In diesem Fall ist es möglich, dass die Schutzeinrichtung durch die Koppeleinrichtung geöffnet wird, wenn diese zur Herstellung einer Wirkverbindung zur Übertragung von Energie in den Bereich der Steckaufnahme verlagert wird, wobei die Schutzeinrichtung durch die Koppeleinrichtung auch wieder geschlossen werden kann, wenn sich diese wieder von dem Koppelmodul und insbesondere von der Steckaufnahme entfernt. Dabei können die die Koppeleinrichtung und das Koppelmodul korrespondierende Mitnehmerelemente aufweisen, die bei Annäherung der Koppeleinrichtung an das Koppelmodul zusammenwirken, um die Schutzeinrichtung zu öffnen, wobei sie miteinander zusammenwirken, um die Schutzeinrichtung zu schließen, wenn die Koppeleinrichtung von dem Koppelmodul und insbesondere von der Steckaufnahme weg verlagert wird.

Alternativ oder zusätzlich ist bevorzugt vorgesehen, dass die Schutzeinrichtung durch ein dem Koppelmodul zugeordnetes Aktuierungsmittel verlagerbar ist. In diesem Fall ist die Schutzeinrichtung aktiv von ihrer Offenstellung in ihre Geschlossenstellung und zurück verlagerbar. Das Aktuierungsmittel ist dabei besonders bevorzugt als elektromechanisches Aktuierungsmittel ausgebildet und weist insbesondere einen Elektromotor auf. Das Aktuierungsmittel kann eine Zahnrad-Zahnstange-Wirkverbindung zwischen einem Antrieb einerseits und der Schutzeinrichtung andererseits aufweisen, wobei das Zahnrad dem Antrieb und die Zahnstange der Schutzeinrichtung zugeordnet sein kann, oder umgekehrt. Besonders bevorzugt ist die Zahnstange an der Schutzeinrichtung angeordnet, wobei das Zahnrad mit dem Antrieb zusammenwirkt und mit der an der Schutzeinrichtung angeordneten Zahnstange kämmt, um die Schutzeinrichtung zu verlagern, wenn das Zahnrad durch den Antrieb gedreht wird. Der Antrieb kann dabei insbesondere als Elektromotor ausgebildet sein.

Dass dem Koppelmodul ein Aktuierungsmittel zugeordnet ist, bedeutet insbesondere, dass das Koppelmodul ein Aktuierungsmittel aufweist. Vorzugsweise ist das Aktuierungsmittel zumindest teilweise in dem Gehäuse angeordnet, besonders bevorzugt ist es vollständig in dem Gehäuse angeordnet. Vorzugsweise wird die Schutzeinrichtung kurz vor dem Herstellen einer Wirkverbindung zur Übertragung von Energie geöffnet. Nach dem Lösen der Wirkverbindung kann sie wieder geschlossen werden.

Besonders bevorzugt ist vorgesehen, dass die Schutzeinrichtung autonom geöffnet und geschlossen werden kann. Hierzu weist das Koppelmodul bevorzugt eine geeignete Steuereinrichtung auf. Das Koppelmodul kann hierzu bevorzugt mit dem ihm zugeordneten Kraftfahrzeug und/oder mit einer Koppeleinrichtung, welche insbesondere zur automatischen Herstellung einer Wirkverbindung mit dem Koppelmodul vorgesehen ist, kommunizieren.

Gemäß einer Weiterbildung der Erfindung ist vorgesehen, dass die Schutzeinrichtung drehbar ausgebildet ist. Dabei ist eine Achse, um welche die Schutzeinrichtung drehbar gelagert ist, bevorzugt parallel zu der Kraftfahrzeug-Unterseite orientiert beziehungsweise liegt in einer Ebene, die parallel zu der Kraftfahrzeug-Unterseite ausgerichtet ist. Auf diese Weise können hohe Momente auf die Schutzeinrichtung aufgebracht werden, was zum einen eine verbesserte Dichtung zwischen dem Gehäuse und der Schutzeinrichtung erlaubt, und zum anderen ein Öffnen der Schutzeinrichtung auch ermöglicht, wenn erschwerte Bedingungen, beispielsweise durch Schmutz, Kälte oder gar Eis vorliegen.

Eine drehbare Schutzeinrichtung kann insbesondere als innere Drehklappe in einem äußeren Gehäuse angeordnet sein, wobei sich die innere Drehklappe in dem äußeren Gehäuse dreht und damit eine insbesondere nach unten, in Richtung eines Bodens, auf welchem das Kraftfahrzeug aufsteht, ausgerichtete Öffnung freigeben kann, durch welche die Steckaufnahme zugänglich ist.

Alternativ oder zusätzlich ist bevorzugt vorgesehen, dass die Schutzeinrichtung schwenkbar ausgebildet ist. Eine Schwenkachse für die Schutzeinrichtung, um welche diese schwenkbar ist, steht dabei bevorzugt senkrecht auf der Kraftfahrzeug-Unterseite. Auf diese Weise kann die Schutzeinrichtung besonders bauraumsparend geöffnet, nämlich einfach in der zu der Kraftfahrzeug-Unterseite parallelen Ebene, in welcher sie auch in der Geschlossenstellung angeordnet ist, von einer Öffnung weg geschwenkt werden, durch welche die Steckaufnahme dann zugänglich ist.

Alternativ oder zusätzliches ist bevorzugt vorgesehen, dass die Schutzeinrichtung linear verlagerbar ist. Dies stellt eine besonders einfache Ausgestaltung für eine Verlagerung der Schutzeinrichtung dar. Bevorzugt ist die Schutzeinrichtung dabei parallel zu der Kraftfahrzeug-Unterseite linear verlagerbar. Sie kann dann in einfacher Weise in einer zu der Kraftfahrzeug-Unterseite parallelen Ebene linear aus ihrer Geschlossenstellung in ihre Offenstellung und zurück verfahren werden. Die lineare Bewegung kann insbesondere als lineare, horizontale Schiebebewegung umgesetzt sein. Dabei wird kein zusätzlicher Platz unterhalb des Koppelmoduls zum Öffnen oder Schließen der Schutzeinrichtung benötigt, sodass das Koppelmodul auch in Fahrzeugen mit sehr geringer Bodenfreiheit montiert werden kann, wobei eine Koppeleinrichtung auch während des Öffnens oder Schließens der Schutzeinrichtung direkt unter dem Koppelmodul stehen kann.

Gemäß einer Weiterbildung der Erfindung ist vorgesehen, dass das Gehäuse mehreckig ausgebildet ist. Dies stellt eine geometrisch besonders einfache Ausgestaltung des Gehäuses dar. Vorzugsweise weist das Gehäuse einen erhöhten Bereich zur Anordnung der Steckaufnahme und einen flachen Bereich zur Aufnahme des Aktuierungsmittels und/oder einer Sensorik und/oder einer Elektronik - insbesondere einer Steuerungseinrichtung zur Steuerung des Koppelmoduls - auf. Der flache Bereich ist dabei flacher als der erhöhte Bereich, wobei der erhöhte Bereich im Vergleich zu dem flachen Bereich eine größere Bauhöhe - insbesondere bei bestimmungsgemäß montiertem Koppelmodul an einem Kraftfahrzeug in Kraftfahrzeug-Hochrichtung gemessen - aufweist. Dies ist für eine kompakte Bauweise des Koppelmoduls vorteilhaft, weil die Steckaufnahme typischerweise eine größere Bauhöhe aufweist als das Aktuierungsmittel und/oder die Sensorik und/oder die Elektronik. Eine entsprechend flache Bauweise ermöglicht zudem den Einsatz des Koppelmoduls in Kraftfahrzeugen aller Art, insbesondere auch in Personenkraftwagen und in Kraftfahrzeugen mit geringer Bodenfreiheit.

Bevorzugt ist das Gehäuse kastenförmig, besonders bevorzugt mit rechteckiger Basis, ausgebildet.

Ein mehreckig ausgebildetes Gehäuse weist besonders bevorzugt eine linear verlagerbare Schutzeinrichtung auf.

Alternativ ist bevorzugt vorgesehen, dass das Gehäuse zylinderförmig ausgebildet ist. Dies bedeutet nicht zwingend, dass das Gehäuse kreiszylindrisch ausgebildet ist, vielmehr kann ein beliebiger Querschnitt, insbesondere ein kreisförmiger, ein ovaler, ein elliptischer, ein mehreckiger, ein kreisförmiger, oder jeder andere geeignete Querschnitt vorgesehen sein. Eine Symmetrieachse des zylinderförmigen Gehäuses erstreckt sich bevorzugt parallel zu der Kraftfahrzeug-Unterseite bei bestimmungsgemäßem Einbau des Koppelmoduls in einem Kraftfahrzeug. Insbesondere liegt die Symmetrieachse dann in einer Ebene, die sich parallel zu der Unterseite erstreckt. Ein solches zylinderförmiges Gehäuse weist vorzugsweise eine drehbare Schutzeinrichtung auf, wobei diese besonders bevorzugt als gebogene Drehklappe ausgebildet ist, deren Krümmung vorzugsweise an eine Krümmung des zylinderförmigen Gehäuses angepasst ist. Dabei ist die gebogene Drehklappe vorzugsweise als Innenteil in dem zylinderförmigen Gehäuse angeordnet und in diesem drehbar gelagert.

Erfindungsgemäß ist vorgesehen, dass das Koppelmodul wenigstens einen Positionierungssensor aufweist, der eingerichtet ist, um eine Position der mit dem Koppelmodul zur Übertragung von Energie in ein Kraftfahrzeug oder aus einem Kraftfahrzeug zusammenwirkenden Koppeleinrichtung relativ zu dem Koppelmodul zu erkennen. Das Koppelmodul weist also insbesondere wenigstens einen Sensor in Form des Positionierungssensors und eine mit dem Sensor wirkverbundene Elektronik, insbesondere eine Steuerungseinrichtung, zur Unterstützung der Navigation der Koppeleinrichtung und zur Kommunikation mit der Koppeleinrichtung und/oder mit dem Kraftfahrzeug auf.

Der Positionierungssensor ist vorzugsweise als optischer Sensor, als elektromagnetischer Sensor, oder in anderer geeigneter Weise ausgebildet. Er ist insbesondere eingerichtet, um der Koppeleinrichtung zu ermöglichen, die Position des Koppelmoduls sowie der darin angeordneten Steckaufnahme bezüglich jeder relevanten Koordinate, insbesondere in der X-Y-Ebene sowie bezüglich eines Winkels relativ zur Kraftfahrzeug-Hochachse, zu erkennen.

Alternativ oder zusätzlich weist das Koppelmodul bevorzugt wenigstens eine Kommunikationseinrichtung auf, die eingerichtet ist zur Informationsübertragung zwischen dem Koppelmodul und einem Kraftfahrzeug. Alternativ oder zusätzlich ist die Kommunikationseinrichtung bevorzugt eingerichtet zur Informationsübertragung zwischen dem Koppelmodul und der Koppeleinrichtung. Alternativ oder zusätzlich ist die Kommunikationseinrichtung bevorzugt eingerichtet zur Kommunikation zwischen dem Koppelmodul und einer externen Kommunikationseinrichtung, d. h. insbesondere einer Kommunikationseinrichtung, die weder dem Koppelmodul, noch der Koppeleinrichtung, noch dem Kraftfahrzeug zugeordnet ist, wobei es sich bei der externen Kommunikationseinrichtung beispielsweise um eine Kommunikationseinrichtung einer mobilen Bedieneinrichtung zur Bedienung des Koppelmoduls, der Koppeleinrichtung und/oder des Kraftfahrzeugs handelt, beispielsweise um ein Tablet, ein Smartphone oder dergleichen, welches insbesondere mit einer geeigneten Software, vorzugsweise einer App, ausgestattet sein kann. Die Kommunikationseinrichtung ist bevorzugt eingerichtet zur drahtlosen Kommunikation, beispielsweise über eine Funkschnittstelle, wie insbesondere WLAN oder Bluetooth, oder eine optische Schnittstelle, beispielsweise eine Infrarot-Schnittstelle. Durch die Kommunikationseinrichtung kann insbesondere ein Energieübertragungsvorgang zur Übertragung von Energie gestartet, gesteuert und/oder beendet werden. Dabei kann die Koppeleinrichtung durch die Kommunikationseinrichtung des Koppelmoduls insbesondere aufgefordert werden, sich mit dem Koppelmodul zu verbinden oder sich von diesem zu trennen.

Alternativ oder zusätzlich weist das Koppelmodul bevorzugt eine Elektronik, d.h. eine elektronische Anordnung, vorzugsweise eine Steuerungseinrichtung, auf, die eingerichtet ist zur Überwachung eines Energieübertragungszustands und/oder eines Energieübertragungsvorgangs, und/oder zur Steuerung des Aktuierungsmittels. Dabei kann die elektronische Anordnung insbesondere überwachen, ob ein Energieübertragungsvorgang gestartet oder beendet werden soll, welchen Zustand die Energieübertragung momentan aufweist, insbesondere welchen Füll- oder Ladezustand ein Energiespeicher des Kraftfahrzeugs aufweist; und/oder die elektronische Anordnung kann das Aktuierungsmittel ansteuern, um die Schutzeinrichtung zu geeigneten Zeitpunkten zu schließen und zu öffnen. Dabei ist die elektronische Anordnung bevorzugt eingerichtet, um über die Kommunikationseinrichtung mit der Koppeleinrichtung, dem Kraftfahrzeug, und/oder einer externen Kommunikationseinrichtung zu kommunizieren.

Alternativ oder zusätzlich weist das Koppelmodul bevorzugt eine Heizeinrichtung auf, die eingerichtet ist zum Beheizen der Schutzeinrichtung und/oder der Steckaufnahme. Mittels der Heizeinrichtung ist es bevorzugt möglich, die Steckaufnahme und/oder die Schutzeinrichtung von Eis zu befreien oder vor Eisbildung zu schützen. Dadurch kann die Funktionsfähigkeit des Koppelmoduls auch bei tiefen Temperaturen gewährleistet werden. Insbesondere kann die Schutzeinrichtung vor dem Öffnen mittels des Heizelements enteist werden, um ein sicheres und zuverlässiges Öffnen und Schließen zu gewährleisten.

Alternativ oder zusätzlich weist das Koppelmodul bevorzugt wenigstens eine Dichteinrichtung auf, die eingerichtet ist zur Abdichtung eines Inneren des Gehäuses, wenn die Schutzeinrichtung in ihrer Geschlossenstellung angeordnet ist. Die wenigstens eine Dichteinrichtung verhindert insbesondere, dass Wasser, Eis, und/oder Schmutz aller Art in das Innere des Gehäuses gelangen kann. Bevorzugt weist das Koppelmodul eine Abstreifvorrichtung auf, welche die Schutzeinrichtung während deren Verlagerung von der Geschlossenstellung in die Offenstellung - und/oder zurück - von Nässe, grobem Schmutz, Eis oder dergleichen reinigen kann. Die Abstreifvorrichtung kann insbesondere als Abstreiflippe ausgebildet sein. Mithilfe der Abstreifvorrichtung kann insbesondere verhindert werden, dass Schmutz und/oder tropfendes Wasser nachträglich in die Koppeleinrichtung, welche sich unter der Steckaufnahme bewegt, fallen kann. Bevorzugt weist das Koppelmodul eine mehrstufige Dichteinrichtung mit einer Mehrzahl von Dichtungen auf, beispielsweise, indem zwei Dichtringe hintereinander angeordnet sind. Um eine einfache und sichere Bewegung der Schutzeinrichtung zu ermöglichen, können Dichtungen der Dichteinrichtung mit speziellen Beschichtungen versehen sein, beispielsweise mit geeigneten Folien, Markierungen, einer PTFE-Beschichtung, oder dergleichen. Dadurch kann die Reibung im Bereich der Schutzeinrichtung minimiert werden, wobei die wenigstens eine Dichteinrichtung zugleich widerstandsfähiger ausgestaltet sein kann.

Vorzugsweise weisen das Koppelmodul und insbesondere das Gehäuse wenigstens eine seitliche Führung zur geführten Verlagerung der Schutzeinrichtung von deren Offenstellung in die Geschlossenstellung - und umgekehrt - auf. Um eine verbesserte Dichtwirkung zu erzielen, sind bevorzugt keilförmige Führungen seitlich und/oder an einem - in Verlagerungsrichtung von der Offenstellung in die Geschlossenstellung gesehen - vorderen Anschlag für die Schutzeinrichtung an dem Gehäuse vorgesehen, wobei die Schutzeinrichtung durch die keilförmigen Führungen während ihrer Verlagerung von der Offenstellung in die Geschlossenstellung und/oder in der Geschlossenstellung gegen die wenigstens eine Dichteinrichtung und/oder gegen wenigstens eine Dichtfläche gedrängt wird. Damit dabei die Kraftübertragung zwischen dem vorzugsweise zum Antrieb der Schutzeinrichtung vorgesehenen Zahnrad und der Zahnstange unvermindert erhalten bleibt, weist/weisen vorzugsweise die Zahnstange und/oder das Zahnrad - insbesondere wenn dieses im Laufe der Verlagerung der Schutzeinrichtung von der Offenstellung in die Geschlossenstellung lediglich eine Umdrehung vollführt - einen geeignet überhöhten Bereich in einem der Geschlossenstellung zugeordneten Eingriffsabschnitt auf, sodass die Verlagerung der Schutzeinrichtung aufgrund der keilförmigen Führungen, die tendenziell zu einer Lockerung der Wirkverbindung zwischen dem Zahnrad und der Zahnstange führt, durch den überhöhten Abschnitt ausgeglichen wird.

Vorzugsweise sind an dem Gehäuse Versteifungen vorgesehen, welche die Stabilität des Koppelmoduls insbesondere gegen ein Aufsetzen und/oder gegen Stein-/Eisschlag erhöhen, insbesondere während der Fahrt eines Kraftfahrzeugs, welches das Koppelmodul aufweist.

Vorzugsweise weist das Koppelmodul wenigstens einen Sensor auf, der eingerichtet ist zur Erkennung von Fehlerzuständen insbesondere während eines Energieübertragungsvorgangs. Der wenigstens eine Sensor ist vorzugsweise mit der Steuerungseinrichtung zur Erkennung von Fehlerzuständen wirkverbunden. Die Steuerungseinrichtung kann dann in geeigneter Weise auf einen Fehlerzustand reagieren, beispielsweise den Energieübertragungsvorgang abbrechen und der Koppeleinrichtung mitteilen, dass sie sich von dem Koppelmodul trennen soll.

Es ist vorgesehen, dass der wenigstens eine Positionierungssensor von einer Ruhestellung in eine Wirkstellung und zurück verlagerbar angeordnet ist, wobei er durch die Schutzeinrichtung zumindest aus seiner Wirkstellung in seine Ruhestellung verlagert werden kann, wenn die Schutzeinrichtung von ihrer Offenstellung in ihre Geschlossenstellung verlagert wird. Bevorzugt ist eine Sensorhalterung vorgesehen, welche den wenigstens einen Positionierungssensor ein- oder ausfährt, oder ein- oder ausklappt, wenn sich die Schutzeinrichtung schließt oder öffnet. Erfindungsgemäß ist der wenigstens eine Positionierungssensor von der Ruhestellung in die Wirkstellung und zurück schwenkbar gelagert, wobei er durch die Schutzeinrichtung in seine Ruhestellung geschwenkt werden kann, wenn diese von ihrer Offenstellung in ihre Geschlossenstellung verlagert wird. Der Positionierungssensor ist in seine Wirkstellung vorgespannt, sodass er unter Vorspannung von der Ruhestellung in die Wirkstellung gedrängt wird, wenn die Schutzeinrichtung von ihrer Geschlossenstellung in ihre Offenstellung verlagert wird. Umgekehrt kann die Schutzeinrichtung dann den Positionierungssensor entgegen der Vorspannung aus seiner Wirkstellung in die Ruhestellung drängen, wenn sie in ihre Geschlossenstellung zurückverlagert wird.

Das Koppelmodul ist bevorzugt so ausgebildet, dass der wenigstens eine Positionierungssensor bei geöffneter Schutzeinrichtung aus dem Gehäuse herausragt, wobei er insbesondere in seiner Wirkstellung federbeaufschlagt an einem Anschlag gehalten wird. Schließt sich die Schutzeinrichtung, wird der wenigstens eine Positionierungssensor in das Innere des Gehäuses - insbesondere entgegen der Vorspannung - gedrängt.

Die Aufgabe wird auch gelöst, indem ein Kraftfahrzeug geschaffen wird, welches ein Koppelmodul nach einem der zuvor beschriebenen Ausführungsbeispiele aufweist. Dabei ist vorgesehen, dass das Koppelmodul an einer Unterseite des Kraftfahrzeugs, vorzugsweise an einem Unterboden des Kraftfahrzeugs, angeordnet ist. Dabei verwirklichen sich in Zusammenhang mit dem Kraftfahrzeug insbesondere die Vorteile, die bereits in Zusammenhang mit dem Koppelmodul erläutert wurden.

Gemäß einer Weiterbildung der Erfindung ist vorgesehen, dass das Kraftfahrzeug als zumindest auch elektrisch angetriebenes Kraftfahrzeug ausgebildet ist, vorzugsweise als Elektrofahrzeug, als Kraftfahrzeug mit Hybridantrieb, oder dergleichen, wobei das Koppelmodul eingerichtet ist zur Übertragung von elektrischer Energie in das Kraftfahrzeug oder aus dem Kraftfahrzeug. Die Steckaufnahme ist in diesem Fall bevorzugt mit einem Ladegerät des Kraftfahrzeugs, mit einer Bordstromversorgung des Kraftfahrzeugs, und/oder mit wenigstens einem Steuergerät des Kraftfahrzeugs wirkverbunden. Das Kraftfahrzeug weist vorzugsweise einen elektrischen Energiespeicher auf, der über eine elektrische Verbindung mit dem Koppelmodul geladen oder entladen werden kann. Der elektrische Energiespeicher ist bevorzugt über das Ladegerät mit der Steckaufnahme elektrisch verbunden. Die Wirkverbindung mit dem Steuergerät des Kraftfahrzeugs kann insbesondere zur Kommunikation mit dem Kraftfahrzeug genutzt werden. Dabei können beispielsweise Informationen über den Ladestatus des elektrischen Energiespeichers, einen Losfahrwunsch eines Betreibers des Kraftfahrzeugs, oder dergleichen übermittelt werden, wobei solche Informationen ein Öffnen oder Schließen der Schutzeinrichtung bewirken können.

Das Kraftfahrzeug kann zusätzlich zu dem Koppelmodul wenigstens eine weitere Lade/Entladedose insbesondere seitlich, an einer Kraftfahrzeug-Stirnseite oder an einem Kraftfahrzeugheck aufweisen, die zugleich mit dem Koppelmodul oder alternativ zu demselben genutzt werden kann. Hierzu kann ein Verteiler vorgesehen sein, der manuell gesteuert oder automatisch zwischen den verschiedenen Lademöglichkeiten, insbesondere der wenigstens ein Lade/Entladedose und dem Koppelmodul, auswählen und wechseln kann.

Das Kraftfahrzeug ist bevorzugt als Personenkraftwagen ausgebildet. Es kann aber auch als Lastkraftwagen, als Nutzfahrzeug, oder als andersartiges Kraftfahrzeug ausgebildet sein.

Die Aufgabe wird schließlich auch gelöst, indem ein Energieübertragungssystem zur Übertragung von Energie in ein Kraftfahrzeug oder aus einem Kraftfahrzeug geschaffen wird, welches eine Energieübertragungseinrichtung zur Übertragung von Energie in ein Kraftfahrzeug oder aus einem Kraftfahrzeug aufweist, wobei die Energieübertragungseinrichtung eine Koppeleinrichtung aufweist, die eingerichtet ist zum Herstellen einer Wirkverbindung zwischen der Energieübertragungseinrichtung und dem Kraftfahrzeug zum Übertragen von Energie, wobei die Koppeleinrichtung frei unter dem Kraftfahrzeug verlagerbar ausgebildet ist. Die Koppeleinrichtung ist bevorzugt als Laderoboter ausgebildet. Das Energieübertragungssystem weist außerdem ein Kraftfahrzeug nach einem der zuvor beschriebenen Ausführungsbeispiele auf, wobei das Koppelmodul des Kraftfahrzeugs eingerichtet ist zur Wirkverbindung , insbesondere zur steckverbindenden Kopplung, mit der Koppeleinrichtung der Energieübertragungseinrichtung. In Zusammenhang mit dem Energieübertragungssystem verwirklichen sich insbesondere die Vorteile, die bereits in Zusammenhang mit dem Koppelmodul und dem Kraftfahrzeug erläutert wurden. Das Koppelmodul und die Koppeleinrichtung sind so aufeinander abgestimmt, dass sie miteinander gekoppelt werden können, um eine Wirkverbindung zwischen der Energieübertragungseinrichtung und dem Kraftfahrzeug herzustellen.

Im Fall der Übertragung von chemischer Energie ist die Koppeleinrichtung vorzugsweise als Schlauch-oder Tankstutzen ausgebildet. Zur Übertragung von elektrischer Energie weist die Koppeleinrichtung vorzugsweise ein elektrisches Verbindungsmittel auf, insbesondere einen Stecker zum Einstecken in die Steckaufnahme, vorzugsweise nach einer zugelassenen Steckernorm, insbesondere nach IEC 62196 in der an dem den Zeitrang der vorliegenden Anmeldung bestimmenden Tag gültigen Fassung.

Die Erfindung wird im Folgenden anhand der Zeichnung näher erläutert. Dabei zeigen:
- Figur 1: eine erste Darstellung eines ersten Ausführungsbeispiels eines Koppelmoduls in zwei verschiedenen Funktionszuständen;
- Figur 2: eine weitere Ansicht des Koppelmoduls gemäß Figur 1;
- Figur 3: eine Innenansicht des Koppelmoduls gemäß den Figuren 1 und 2;
- Figur 4: drei verschiedene Schnittdarstellungen des Koppelmoduls gemäß den Figuren 1 bis 3, und
- Figur 5: eine Darstellung eines zweiten Ausführungsbeispiels eines Koppelmoduls.

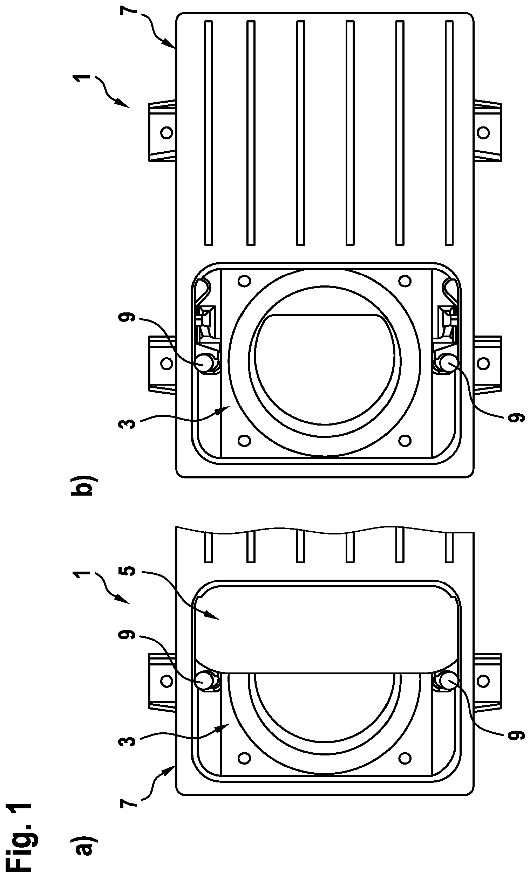

Figur 1 zeigt eine Darstellung eines ersten Ausführungsbeispiels eines Koppelmoduls 1 in zwei verschiedenen Funktionszuständen. Das Koppelmodul 1 ist eingerichtet zur Übertragung von Energie in ein oder aus einem nicht dargestellten Kraftfahrzeug und weist eine Steckaufnahme 3 auf, die eingerichtet ist zur Herstellung einer energieübertragenden Wirkverbindung. Das Koppelmodul ist insbesondere eingerichtet zur Herstellung einer elektrischen Verbindung, insbesondere zum Laden oder Entladen eines elektrischen Energiespeichers eines Kraftfahrzeugs, wobei die Steckaufnahme 3 insbesondere als elektrische Steckdose ausgebildet und eingerichtet ist, um einen elektrischen Stecker aufzunehmen. Dabei ist die Steckaufnahme 3 bevorzugt ausgebildet nach einer zugelassenen Steckernorm, insbesondere nach IEC 62196 in der an dem den Zeitrang der vorliegenden Anmeldung bestimmenden Tag gültigen Fassung.

Das Koppelmodul 1 weist eine Schutzeinrichtung 5 auf, die in eine bei b) dargestellte Offenstellung sowie in eine hier nicht dargestellt Geschlossenstellung verlagerbar ist. Dabei ist bei a) ein Zustand des Koppelmoduls 1 dargestellt, bei welchem die Schutzeinrichtung 5 zwischen ihrer Offenstellung und ihrer Geschlossenstellung angeordnet ist. Die Schutzeinrichtung 5 ist eingerichtet, um die Steckaufnahme 3 in der Geschlossenstellung vor wenigstens einem Umwelteinfluss zu schützen. Das Koppelmodul 1 ist eingerichtet zur Anordnung an einer Kraftfahrzeug-Unterseite.

Das Koppelmodul 1 weist ein Gehäuse 7 auf, in dem die Steckaufnahme 3 angeordnet ist. Die Schutzeinrichtung 5 ist dabei als Schutzklappe ausgebildet, die das Gehäuse 7 in der Geschlossenstellung verschließt.

Bei dem hier dargestellten, ersten Ausführungsbeispiel des Koppelmoduls 1 ist die Schutzeinrichtung 5 linear verlagerbar - in Figur 1 in horizontaler Richtung, d. h. insbesondere von links nach rechts und umgekehrt - verlagerbar, wobei die lineare Verlagerung insbesondere parallel zu der Kraftfahrzeug-Unterseite erfolgt, wenn das Koppelmodul 1 bestimmungsgemäß an einem Kraftfahrzeug angeordnet ist. Alternativ ist es möglich, dass die Schutzeinrichtung 5 schwenkbar, insbesondere innerhalb einer zu der Kraftfahrzeug-Unterseite parallel ausgerichteten Ebene um eine senkrecht auf dieser Ebene stehende Schwenkachse, ausgebildet ist.

Das Gehäuse 7 ist hier mehreckig ausgebildet, wobei es insbesondere eine rechteckige Grundfläche oder Basis aufweist.

Das Koppelmodul 1 weist wenigstens einen Positionierungssensor, hier zwei Positionierungssensoren 9 auf, die eingerichtet sind, um eine Position einer hier nicht dargestellten, mit dem Koppelmodul 1 zur Übertragung von Energie in ein Kraftfahrzeug oder aus einem Kraftfahrzeug zusammenwirkenden Koppeleinrichtung relativ zu dem Koppelmodul 1 zu erkennen. Die Positionierungssensoren 9 können in einer besonders einfachen und zugleich funktionalen Ausgestaltung als Berührungssensoren ausgebildet sein; aber auch jede andere Ausgestaltung eines Positionierungssensors 9 ist möglich, beispielsweise eine Ausgestaltung als berührungsloser Sensor, der auf einer optischen Technik, beispielsweise unter Verwendung von Infrarotstrahlung, auf einer Funktechnologie, einer Kapazitätsmessung und/oder einer Erfassung elektromagnetischer Feldänderungen in einer Umgebung des Positionierungssensors 9, oder einer anderen geeigneten Technologie beruhen kann.

Die Schutzeinrichtung 5 ist hier innerhalb des Gehäuses 7 angeordnet und in dem Gehäuse 7 verlagerbar.

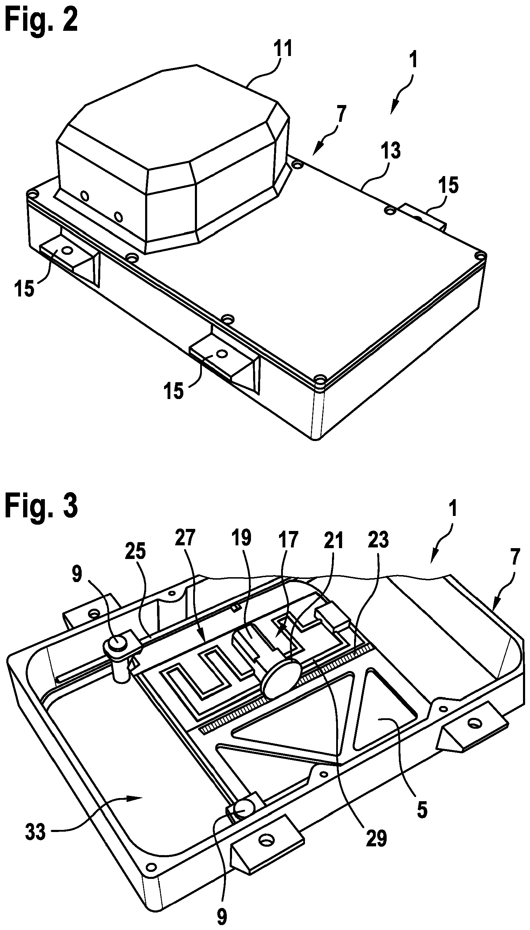

Figur 2 zeigt eine weitere Ansicht des Koppelmoduls 1 gemäß Figur 1. Gleiche und funktionsgleiche Elemente sind mit gleichen Bezugszeichen versehen, sodass insofern auf die vorangegangene Beschreibung verwiesen wird. Anhand von Figur 2 zeigt sich, dass das Gehäuse 7 insbesondere einen erhöhten Bereich 11 sowie einen flachen Bereich 13 aufweist, wobei der erhöhte Bereich 11 im Vergleich zu dem flachen Bereich 13 - in vertikaler Richtung oder Z-Richtung gesehen - höher ist als der flache Bereich 13, wobei der flache Bereich 13 flacher ist als der erhöhte Bereich 11. In dem erhöhten Bereich 11 des Gehäuses 7 ist die Steckaufnahme 3 angeordnet, wobei in dem flachen Bereich 13 bevorzugt ein im folgenden noch näher erläutertes Aktuierungsmittel sowie vorzugsweise eine elektronische Anordnung, insbesondere eine Steuerungseinrichtung für das Koppelmodul 1, angeordnet ist. Das Aktuierungsmittel dient dabei insbesondere zur Aktuierung der Verlagerung der Schutzeinrichtung 5 von deren Geschlossenstellung in die Offenstellung und zurück.

Das Gehäuse 7 weist noch Verbindungselemente 15 zum Verbinden, insbesondere zum Anschrauben, an ein Kraftfahrzeug, insbesondere an eine Kraftfahrzeug-Unterseite, auf.

Figur 3 zeigt eine weitere Darstellung des Koppelmoduls 1 gemäß den Figuren 1 und 2, wobei in Figur 3 insbesondere ein Inneres 33 des Gehäuses 7 dargestellt ist. Gleiche und funktionsgleiche Elemente sind mit gleichen Bezugszeichen versehen, sodass insofern auf die vorangegangene Beschreibung verwiesen wird. Dargestellt ist hier insbesondere die in dem Gehäuse 7 verlagerbar gehaltene Schutzeinrichtung 5, die durch ein Aktuierungsmittel 17 von ihrer Geschlossenstellung in ihre Offenstellung und zurück verlagert werden kann. Dabei weist das Aktuierungsmittel 17 hier einen Antrieb 19, insbesondere einen Elektromotor, und ein mit dem Antrieb 19 antriebswirkverbundenes Zahnrad 21 auf, welches mit einer an der Schutzeinrichtung 5 angeordneten Zahnstange 23 kämmt, sodass die Schutzeinrichtung 5 linear verlagerbar ist, wenn das Zahnrad 21 durch den Antrieb 19 zu einer Drehbewegung angetrieben wird, wobei die Zahnstange 23 wiederum durch das Zahnrad 21 zu einer linearen Verlagerung veranlasst wird. Das Aktuierungsmittel 17 ist hier insbesondere mittig in dem Gehäuse 7 angeordnet, was eine symmetrische Krafteinleitung der Antriebskraft in die Schutzeinrichtung 5 ermöglicht. Dadurch kann in sehr wirksamer Weise ein Verkanten der Schutzeinrichtung 5 vermieden werden.

Dargestellt ist auch eine seitliche Führung 25, die eingerichtet ist zur Halterung und Führung der Schutzeinrichtung 5, wobei an der gegenüberliegenden Seite der Schutzeinrichtung 5 eine in Figur 3 dem Betrachter verdeckte, vorzugsweise identisch ausgebildete, weitere seitliche Führung vorgesehen ist, sodass die Schutzeinrichtung 5 insgesamt symmetrisch gehalten und geführt ist.

Alternativ ist es auch möglich, dass die Schutzeinrichtung 5 durch die Koppeleinrichtung verlagerbar ist, wobei diese die Schutzeinrichtung 5 von ihrer Geschlossenstellung in ihre Offenstellung verlagern kann, wenn sie sich dem Koppelmodul 1 zur Herstellung einer energieübertragenden Wirkverbindung nähert. Entsprechend kann die Schutzeinrichtung 5 bevorzugt durch die Koppeleinrichtung wieder geschlossen werden, wenn sich diese von dem Koppelmodul 1 nach einem Trennen der energieübertragenden Wirkverbindung wieder entfernt. Es bedarf dann keines separaten Aktuierungsmittels. Eine solche Verlagerung der Schutzeinrichtung 5 durch die Koppeleinrichtung kann insbesondere mittels geeigneter Mitnehmerelemente verwirklicht werden, die einerseits an der Koppeleinrichtung und andererseits an der Schutzeinrichtung 5 vorgesehen sein können.

Das Koppelmodul 1 weist auch eine Heizeinrichtung 27 auf, die hier insbesondere als an der Schutzeinrichtung 5 angeordnete, elektrische Heizung mit einem Heizdraht 29 oder einer Heizwicklung ausgebildet ist, wobei die Heizeinrichtung 27 eingerichtet ist, um die Schutzeinrichtung 5 und/oder die Steckaufnahme 3 zu beheizen. Auf diese Weise kann insbesondere eine Funktionsfähigkeit der Schutzeinrichtung 5 und/oder der Steckaufnahme 3 auch bei tiefen Temperaturen und insbesondere auch unter vereisten Bedingungen gewährleistet werden.

Die Positionierungssensoren 9 sind bei dem hier dargestellten Ausführungsbeispiel von einer nicht dargestellten Ruhestellung in eine dargestellte Wirkstellung und zurück verlagerbar, wobei sie hier insbesondere kipp- oder schwenkbar gehalten sind. Sie sind dabei durch die Schutzeinrichtung 5 zumindest aus der Wirkstellung in die Ruhestellung verlagerbar, wenn die Schutzeinrichtung 5 von ihrer Offenstellung in ihre Geschlossenstellung verlagert wird. Vorzugsweise sind die Positionierungssensoren 9 in ihre Wirkstellung vorgespannt, wobei sie gegen einen Anschlag gedrängt werden, welcher die Wirkstellung definiert. Wird die Schutzeinrichtung 5 von ihrer Geschlossenstellung in die Offenstellung verlagert, schwenken die Positionierungssensoren 9 von selbst unter Vorspannung aus der Ruhestellung in ihre Wirkstellung, in welcher sie durch den Anschlag gehalten werden. Wird die Schutzeinrichtung 5 aus ihrer Offenstellung in die Geschlossenstellung verlagert, drängt sie die Positionierungssensoren 9 entgegen der Vorspannung aus der Wirkstellung in die Ruhestellung.

Bevorzugt ist vorgesehen, dass die Positionierungssensoren 9 in ihrer Wirkstellung über das Gehäuse 7 überstehen, mithin aus diesem herausragen. Wird die Schutzeinrichtung 5 von ihrer Offenstellung in die Geschlossenstellung verlagert, drängt sie die Positionierungssensoren 9 insbesondere in das Innere 33 des Gehäuses 7, wobei die Positionierungssensoren 9 in ihrer Ruhestellung vollständig innerhalb des Gehäuses 7 angeordnet sind.

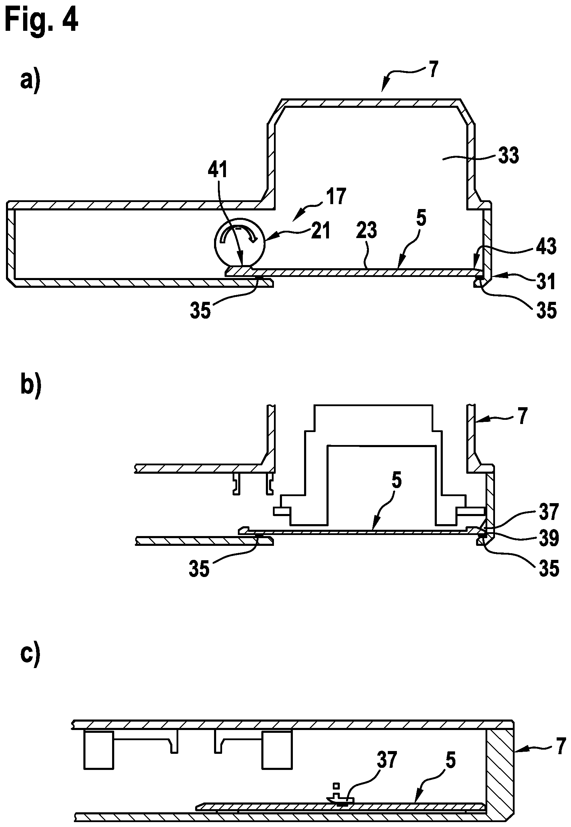

Figur 4 zeigt eine weitere Darstellung des Koppelmoduls 1 gemäß den Figuren 1 bis 3 in mehreren Schnittebenen. Gleiche und funktionsgleiche Elemente sind mit gleichen Bezugszeichen versehen, sodass insofern auf die vorangegangene Beschreibung verwiesen wird.

Dabei ist bei a) eine Schnittansicht in einer mittig angeordneten Längsschnittebene durch das Gehäuse 7 - unter Weglassung bestimmter Details wie beispielsweise der Steckaufnahme 3 - dargestellt, wobei das Aktuierungsmittel 17 mit dem Zahnrad 21 dargestellt ist, und wobei auch die Schutzeinrichtung 5 mit der Zahnstange 23 dargestellt ist. Weiterhin ist dargestellt, dass das Koppelmodul 1 bevorzugt eine Dichteinrichtung 31 zur Abdichtung des Inneren 33 des Gehäuses 7 aufweist, wobei das Innere 33 durch die Dichteinrichtung 31 abgedichtet ist, wenn die Schutzeinrichtung 5 in ihrer Geschlossenstellung angeordnet ist. Dabei weist die Dichteinrichtung 31 hier mindestens zwei Dichtungen 35 auf, wobei auch wenigstens eine umlaufende Fensterdichtung vorgesehen sein kann. Es ist auch möglich, dass mehrere Dichtungen 35 hinter- und/oder nebeneinander vorgesehen sein können, um die Dichtwirkung zu verbessern. Die Schutzeinrichtung 5 wird bevorzugt insbesondere in ihrer Geschlossenstellung - in der Figur nach unten - gegen die Dichteinrichtung 31 gedrängt. Dabei ist hier die Dichteinrichtung 31 an dem Gehäuse 7 vorgesehen. Alternativ ist es aber auch möglich, dass wenigstens eine Dichtung 35 der Dichteinrichtung 31 an der Schutzeinrichtung 5 vorgesehen ist. In diesem Fall wird die Schutzeinrichtung 5 bevorzugt insbesondere in ihrer Geschlossenstellung mit der wenigstens einen Dichtung 35 gegen eine Dichtfläche des Gehäuses 7 gedrängt.

Bei b) ist insoweit dargestellt, dass das Gehäuse 7 hier eine keilförmige Führung 37 aufweist, durch welche ein - in Verlagerungsrichtung von der Offenstellung in die Geschlossenstellung gesehen - vorderes Ende oder Frontende 39 der Schutzeinrichtung 5 in der Geschlossenstellung geführt, gehalten und insbesondere gegen die Dichtung 35 oder eine entsprechende Dichtfläche gedrängt wird.

Bei c) ist dargestellt, dass eine solche keilförmige Führunge 37 auch - in Verlagerungsrichtung gesehen - mittig angeordnet sein kann, wobei in diesem Fall vorzugsweise seitlich zwei keilförmige Führungen 37 - bevorzugt im Bereich der seitlichen Führungen 25 - und insbesondere symmetrisch beidseits der Zahnstange 23 angeordnet sein können.

Jedenfalls wird die Schutzeinrichtung 5 durch die keilförmigen Führungen 37 gegen die Dichteinrichtung 31, insbesondere die Dichtung 35, oder eine entsprechende Dichtfläche - in der Figur nach unten - gedrängt, wodurch tendenziell eine Lockerung der kämmenden Wirkverbindung des Zahnrad 21 mit der Zahnstange 23 bewirkt wird. Um gleichwohl in jeder Position eine hinreichende Kraftübertragung für das Aktuierungsmittel 17 zu gewährleisten, weist hier die Zahnstange 23 in einem der Geschlossenstellung bezüglich der Zusammenwirkung mit dem Zahnrad 21 zugeordneten Endbereich 41 - wie bei a) dargestellt - eine Überhöhung auf, sie ist also insbesondere in dem der Geschlossenstellung zugeordneten Endbereich 41 höher ausgebildet als in einem der Offenstellung zugeordneten, gegenüberliegenden Endbereich 43. Sind das Zahnrad 21 und die Zahnstange 23 so ausgelegt, dass das Zahnrad 21 für eine vollständige Verlagerung der Schutzeinrichtung 5 von der Geschlossenstellung in die Offenstellung oder zurück eine Mehrzahl von Umdrehungen durchführen muss, ist die Erhöhung bevorzugt in dem Endbereich 41 der Zahnstange 23 vorgesehen. Muss dagegen das Zahnrad 21 für eine vollständige Verlagerung der Schutzeinrichtung 5 beispielsweise von der Offenstellung in die Geschlossenstellung lediglich eine Umdrehung - oder sogar weniger als eine Umdrehung - vollführen, kann eine entsprechende Erhöhung auch an dem Zahnrad 21 vorgesehen sein.

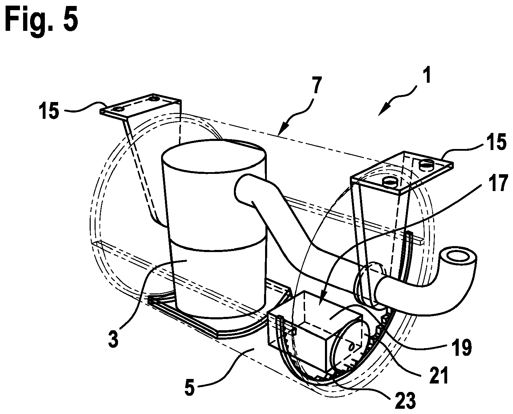

Figur 5 zeigt eine Darstellung eines zweiten Ausführungsbeispiels des Koppelmoduls 1. Gleiche und funktionsgleiche Elemente sind mit gleichen Bezugszeichen versehen, sodass insoweit auf die vorangegangene Beschreibung verwiesen wird. Bei diesem zweiten Ausführungsbeispiels ist das Gehäuse 7 zylinderförmig ausgebildet, wobei sich eine Symmetrieachse des zylinderförmigen Gehäuses 7 bei bestimmungsgemäßem Einbau des Koppelmoduls 1 an einem Kraftfahrzeug in einer Ebene erstreckt, die parallel zu der Kraftfahrzeug-Unterseite, insbesondere zum Unterboden des Kraftfahrzeugs, orientiert ist. In dem Gehäuse 7 ist die Steckaufnahme 3 angeordnet. Die Schutzeinrichtung 5 ist hier als gebogene Schutzklappe ausgebildet, welche insbesondere bezüglich ihrer Biegung der Krümmung der Mantelfläche des zylinderförmigen Gehäuses 7 folgt. Dabei ist die Schutzeinrichtung 5 hier drehbar in dem Gehäuse 7 gelagert, nämlich drehbar um die Symmetrieachse des Gehäuses 7. Dabei ist das Aktuierungsmittel 17 - wie bereits in Zusammenhang mit dem ersten Ausführungsbeispiel erläutert - hier ebenfalls elektromotorisch ausgebildet und weist den als Elektromotor ausgebildeten Antrieb 19 auf, der mit dem Zahnrad 21 antriebswirkverbunden ist, wobei hier die Zahnstange 23 gebogen ausgebildet und an der gekrümmten Schutzeinrichtung 5 - in diesem Fall randständig oder seitlich - angeordnet ist. Bei dieser Konfiguration können sehr hohe Momente auf die Schutzeinrichtung 5 zu deren Verlagerung aufgebracht werden, was auch unter widrigen Umständen, beispielsweise bei Verschmutzung oder Vereisung, ein tadelloses Öffnen und Schließen der Schutzeinrichtung 5 gewährleistet.

Das Koppelmodul 1 weist gemäß der beiden in den Figuren dargestellten Ausführungsbeispiele bevorzugt wenigstens eine Kommunikationseinrichtung auf, die eingerichtet ist zur Informationsübertragung zwischen dem Koppelmodul 1 und einem Kraftfahrzeug, und/oder zwischen dem Koppelmodul 1 und einer mit dem Koppelmodul 1 zur Übertragung von Energie zusammenwirkenden Koppeleinrichtung, und/oder zwischen dem Koppelmodul 1 und einer externen Kommunikationseinrichtung. Alternativ oder zusätzlich weist das Koppelmodul 1 bevorzugt eine elektronische Anordnung, insbesondere eine Steuerungseinrichtung auf, die eingerichtet ist zur Überwachung eines Energieübertragungszustands, eines Energieübertragungsvorgangs, und/oder zur Steuerung des Aktuierungsmittels 17.

Das Koppelmodul 1 wird bevorzugt verwendet bei einem Kraftfahrzeug, welches zumindest auch elektrisch angetrieben ist, wobei das Koppelmodul 1 eingerichtet ist zur Übertragung von elektrischer Energie in das Kraftfahrzeug oder aus diesem, wobei die Steckaufnahme 3 mit einem Ladegerät des Kraftfahrzeugs, einer Bordstromversorgung des Kraftfahrzeugs, und/oder wenigstens einem Steuergerät des Kraftfahrzeugs wirkverbunden ist.

Das Koppelmodul 1 ist bevorzugt als Teil eines Energieübertragungssystems zur Übertragung von Energie in ein Kraftfahrzeug oder aus einem Kraftfahrzeug, wobei das Energieübertragungssystem eine Energieübertragungseinrichtung zur Übertragung von Energie aufweist, die eine Koppeleinrichtung aufweist, die eingerichtet ist zum Herstellen einer Wirkverbindung zwischen der Energieübertragungseinrichtung und dem Kraftfahrzeug zum Übertragen von Energie in das oder aus dem Kraftfahrzeug, wobei die Koppeleinrichtung frei unter dem Kraftfahrzeug verlagerbar ausgebildet ist. Das Koppelmodul 1 des Kraftfahrzeugs ist insbesondere eingerichtet zur Wirkverbindung mit der Koppeleinrichtung der Energieübertragungseinrichtung.

Insgesamt zeigt sich, dass mit dem hier vorgeschlagenen Koppelmodul 1, dem Kraftfahrzeug und dem Energieübertragungssystem eine effiziente und für einen Betreiber des Kraftfahrzeugs komfortable Energieübertragung zu dem Kraftfahrzeug von unten, insbesondere automatisiert, beispielsweise durch einen Laderoboter, bereitgestellt werden kann.

## Patentansprüche

1. Koppelmodul (1), eingerichtet zur Übertragung von Energie an einem Kraftfahrzeug, mit einer Steckaufnahme (3), eingerichtet zur Herstellung einer energieübertragenden Wirkverbindung, und mit einer Schutzeinrichtung (5), die in eine Offenstellung und in eine Geschlossenstellung verlagerbar und eingerichtet ist, um die Steckaufnahme (3) in der Geschlossenstellung vor wenigstens einem Umwelteinfluss zu schützen, wobei das Koppelmodul (1) eingerichtet ist zur Anordnung an einer Kraftfahrzeug-Unterseite, wobei das Koppelmodul (1) wenigstens einen Positionierungssensor (9) aufweist, der eingerichtet ist, um eine Position einer mit dem Koppelmodul (1) zur Übertragung von Energie in ein oder aus einem Kraftfahrzeug zusammenwirkenden Koppeleinrichtung relativ zu dem Koppelmodul (1) zu erkennen, **dadurch gekennzeichnet, dass** der wenigstens eine Positionierungssensor (9) von einer Ruhestellung in eine Wirkstellung und zurück schwenkbar gelagert ist, wobei er durch die Schutzeinrichtung (5) in seine Ruhestellung schwenkbar ist, wenn die Schutzeinrichtung (5) von ihrer Offenstellung in ihre Geschlossenstellung verlagert wird, wobei der Positionierungssensor (9) in seine Wirkstellung vorgespannt ist, sodass er unter Vorspannung von der Ruhestellung in die Wirkstellung gedrängt wird, wenn die Schutzeinrichtung (5) von ihrer Geschlossenstellung in ihre Offenstellung verlagert wird.

2. Koppelmodul (1) nach Anspruch 1, **dadurch gekennzeichnet, dass** das Koppelmodul (1) ein Gehäuse (7) aufweist, in dem die Steckaufnahme (3) angeordnet ist, und dass die Schutzeinrichtung (5) als Schutzklappe ausgebildet ist, die in der Geschlossenstellung das Gehäuse (7) verschließt.

3. Koppelmodul (1) nach einem der vorhergehenden Ansprüche, **dadurch gekennzeichnet, dass** die Schutzeinrichtung (5) durch eine mit dem Koppelmodul (1) zur Übertragung von Energie in ein oder aus einem Kraftfahrzeug zusammenwirkende Koppeleinrichtung verlagerbar ist.

4. Koppelmodul (1) nach einem der vorhergehenden Ansprüche, **dadurch gekennzeichnet, dass** die Schutzeinrichtung (5) durch ein dem Koppelmodul (1) zugeordnetes Aktuierungsmittel (17) verlagerbar ist.

5. Koppelmodul (1) nach einem der vorhergehenden Ansprüche, **dadurch gekennzeichnet, dass** die Schutzeinrichtung (5)
- drehbar,
- schwenkbar, und/oder
- linear verlagerbar, insbesondere parallel zu der Kraftfahrzeug-Unterseite,
ausgebildet ist.

6. Koppelmodul (1) nach einem der vorhergehenden Ansprüche, **dadurch gekennzeichnet, dass** das Gehäuse (7) mehreckig oder zylinderförmig ausgebildet ist.

7. Koppelmodul (1) nach einem der vorhergehenden Ansprüche, **dadurch gekennzeichnet, dass** das Koppelmodul (1) wenigstens eine Kommunikationseinrichtung aufweist, die eingerichtet ist zur Informationsübertragung zwischen dem Koppelmodul (1) und einem Kraftfahrzeug, und/oder zwischen dem Koppelmodul (1) und einer mit dem Koppelmodul (1) zur Übertragung von Energie in ein oder aus einem Kraftfahrzeug zusammenwirkenden Koppeleinrichtung, und/oder zwischen dem Koppelmodul (1) und einer externen Kommunikationseinrichtung.

8. Koppelmodul (1) nach einem der vorhergehenden Ansprüche, **dadurch gekennzeichnet, dass** das Koppelmodul (1) eine elektronische Anordnung aufweist, die eingerichtet ist zur Überwachung eines Energieübertragungszustands, und/oder eines Energieübertragungsvorgangs.

9. Koppelmodul (1) nach Anspruch 4, **dadurch gekennzeichnet, dass** das Koppelmodul (1) eine elektronische Anordnung, eingerichtet zur Steuerung des Aktuierungsmittels (17), aufweist.

10. Koppelmodul (1) nach einem der vorhergehenden Ansprüche, **dadurch gekennzeichnet, dass** das Koppelmodul (1) eine Heizeinrichtung (27) aufweist, die eingerichtet ist zum Beheizen der Schutzeinrichtung (5) und/oder der Steckaufnahme (3).

11. Koppelmodul (1) nach einem der vorhergehenden Ansprüche, **dadurch gekennzeichnet, dass** das Koppelmodul (1) wenigstens eine Dichteinrichtung (31) aufweist, die eingerichtet ist zur Abdichtung eines Inneren (33) des Gehäuses (7), wenn die Schutzeinrichtung (5) in ihrer Geschlossenstellung angeordnet ist.

12. Kraftfahrzeug, mit einem Koppelmodul (1) nach einem der Ansprüche 1 bis 11, **dadurch gekennzeichnet, dass** das Koppelmodul (1) an einer Unterseite des Kraftfahrzeugs angeordnet ist.

13. Kraftfahrzeug nach Anspruch 12, **dadurch gekennzeichnet, dass** das Kraftfahrzeug als zumindest auch elektrisch angetriebenes Kraftfahrzeug ausgebildet ist, wobei das Koppelmodul (1) eingerichtet ist zur Übertragung von elektrischer Energie in das Kraftfahrzeug oder aus dem Kraftfahrzeug, wobei die Steckaufnahme (3) mit einem Ladegerät des Kraftfahrzeugs, einer Bordstromversorgung des Kraftfahrzeugs, und/oder wenigstens einem Steuergerät des Kraftfahrzeugs wirkverbunden ist.

14. Energieübertragungssystem zur Übertragung von Energie für ein Kraftfahrzeug, mit einer Energieübertragungseinrichtung zur Übertragung von Energie in ein Kraftfahrzeug oder aus dem Kraftfahrzeug, die eine Koppeleinrichtung aufweist, die eingerichtet ist zum Herstellen einer Wirkverbindung zwischen der Energieübertragungseinrichtung und einem Kraftfahrzeug zum Übertragen von Energie in das Kraftfahrzeug oder aus dem Kraftfahrzeug, und mit einem Kraftfahrzeug nach einem der Ansprüche 12 und 13, wobei das Koppelmodul (1) des Kraftfahrzeugs eingerichtet ist zur Wirkverbindung mit der Koppeleinrichtung der Energieübertragungseinrichtung, und wobei die Koppeleinrichtung frei unter dem Kraftfahrzeug verlagerbar ausgebildet ist.

## Claims

1. Coupling module (1), configured for the transmission of energy in a motor vehicle, having a receptacle (3), configured for the establishment of an energy-transmitting operative connection, and having a protective device (5), which is displaceable into an open position and into a closed position and is configured to protect the receptacle (3) in the closed position from at least one environmental influence, wherein the coupling module (1) is configured to be arranged on an underside of a motor vehicle, wherein the coupling module (1) has at least one positioning sensor (9), which is configured to detect a position relative to the coupling module (1) of a coupling device cooperating with the coupling module (1) for the transmission of energy into or out of a motor vehicle, **characterised in that** the at least one positioning sensor (9) is mounted so as to be pivotable from a rest position into an operative position and back, wherein it can be pivoted into its rest position by the protective device (5), if the protective device (5) is moved from its open position to its closed position, wherein the positioning sensor (9) is biased into its operative position, so that it is urged under pretension from the rest position into the active position when the protective device (5) is moved from its closed position into its open position.

2. Coupling module (1) according to claim 1, **characterised in that** the coupling module (1) has a housing (7) in which the receptacle (3) is arranged, and **in that** the protective device (5) is designed as a protective flap which closes the housing (7) in the closed position.

3. Coupling module (1) according to any one of the preceding claims, **characterised in that** the protective device (5) is displaceable by a coupling device cooperating with the coupling module (1) for the transmission of energy to or out of a motor vehicle.

4. Coupling module (1) according to any one of the preceding claims, **characterised in that** the protective device (5) is displaceable by an actuating means (17) assigned to the coupling module (1).

5. Coupling module (1) according to any one of the preceding claims, **characterised in that** the protective device (5) is designed to be
- rotatable,
- pivotable, and/or
- linearly displaceable, in particular parallel to the underside of the motor vehicle.

6. Coupling module (1) according to any one of the preceding claims, **characterised in that** the housing (7) is of polygonal or cylindrical design.

7. Coupling module (1) according to any one of the preceding claims, **characterised in that** the coupling module (1) has at least one communication device which is configured for the transmission of information between the coupling module (1) and a motor vehicle, and/or between the coupling module (1) and a coupling device cooperating with the coupling module (1) for the transmission of energy into or out of a motor vehicle, and/or between the coupling module (1) and an external communication device.

8. Coupling module (1) according to any one of the preceding claims, **characterised in that** the coupling module (1) has an electronic arrangement which is configured for the monitoring of an energy transmission state and/or an energy transmission process.

9. Coupling module (1) according to claim 4, **characterised in that** the coupling module (1) comprises an electronic arrangement configured to control the actuating means (17).

10. Coupling module (1) according to any one of the preceding claims, **characterised in that** the coupling module (1) has a heating device (27) which is configured to heat the protective device (5) and/or the receptacle (3).

11. Coupling module (1) according to any one of the preceding claims, **characterised in that** the coupling module (1) comprises at least one sealing device (31), which is configured for the sealing of an interior (33) of the housing (7) when the protective device (5) is arranged in its closed position.

12. Motor vehicle, having a coupling module (1) according to any one of claims 1 to 11, **characterised in that** the coupling module (1) is arranged on an underside of the motor vehicle.

13. Motor vehicle according to claim 12, **characterised in that** the motor vehicle is designed as an at least also electrically powered motor vehicle, wherein the coupling module (1) is configured for the transmission of electrical energy into the motor vehicle or out of the motor vehicle, wherein the receptacle (3) is operatively connected to a charging device of the motor vehicle, an on-board power supply of the motor vehicle, and/or at least one control device of the motor vehicle.

14. Energy transmission system for the transmission of energy for a motor vehicle, having an energy transmission device for the transmission of energy into a motor vehicle or out of the motor vehicle, which has a coupling device which is configured for the production of an operative connection between the energy transmission device and a motor vehicle for the transmission of energy into the motor vehicle or out of the motor vehicle, and having a motor vehicle according to any one of claims 12 and 13, wherein the coupling module (1) of the motor vehicle is configured for operative connection to the coupling device of the energy transmission device, and wherein the coupling device is designed such that it can be displaced freely under the motor vehicle.

## Revendications

1. Module de couplage (1) aménagé pour la transmission d'énergie à un véhicule automobile, avec un logement d'enfichage (3), aménagé pour l'établissement d'une liaison active transmettant de l'énergie, et avec un appareil de protection (5) qui est déplaçable et aménagé dans une position ouverte et dans une position fermée afin de protéger le logement d'enfichage (3) dans la position fermée d'au moins une influence environnementale, dans lequel le module de couplage (1) est aménagé pour l'agencement au niveau d'un côté inférieur de véhicule automobile, dans lequel le module de couplage (1) présente au moins un capteur de positionnement (9) qui est aménagé afin de reconnaître une position d'un appareil de couplage coagissant avec le module de couplage (1) pour la transmission d'énergie dans un ou depuis un véhicule automobile par rapport au module de couplage (1), **caractérisé en ce que** l'au moins un capteur de positionnement (9) est logé de manière pivotante d'une position de repos dans une position active et inversement, dans lequel il peut être pivoté par l'appareil de protection (5) dans sa position de repos lorsque l'appareil de protection (5) est déplacé de sa position ouverte dans sa position fermée, dans lequel le capteur de positionnement (9) est précontraint dans sa position active de sorte qu'il soit poussé sous précontrainte de la position de repos dans la position active lorsque l'appareil de protection (5) est déplacé de sa position fermée dans sa position ouverte.

2. Module de couplage (1) selon la revendication 1, **caractérisé en ce que** le module de couplage (1) présente un boîtier (7), dans lequel le logement d'enfichage (3) est agencé, et que l'appareil de protection (5) est réalisé comme clapet de protection qui ferme dans la position fermée le boîtier (7).

3. Module de couplage (1) selon l'une quelconque des revendications précédentes, **caractérisé en ce que** l'appareil de protection (5) peut être déplacé par un appareil de couplage coagissant avec le module de couplage (1) pour la transmission d'énergie dans un ou depuis un véhicule automobile.

4. Module de couplage (1) selon l'une quelconque des revendications précédentes, **caractérisé en ce que** l'appareil de protection (5) peut être déplacé par un moyen d'actionnement (17) associé au module de couplage (1).

5. Module de couplage (1) selon l'une quelconque des revendications précédentes, **caractérisé en ce que** l'appareil de protection (5) est réalisé
- de manière rotative,
- de manière pivotante, et/ou
- de manière déplaçable linéairement, en particulier parallèlement au côté inférieur de véhicule automobile.

6. Module de couplage (1) selon l'une quelconque des revendications précédentes, **caractérisé en ce que** le boîtier (7) est réalisé de manière polygonale ou en forme de cylindre.

7. Module de couplage (1) selon l'une quelconque des revendications précédentes, **caractérisé en ce que** le module de couplage (1) présente au moins un appareil de communication qui est aménagé pour la transmission d'informations entre le module de couplage (1) et un véhicule automobile, et/ou entre le module de couplage (1) et un appareil de couplage coagissant avec le module de couplage (1) pour la transmission d'énergie dans un ou depuis un véhicule automobile, et/ou entre le module de couplage (1) et un appareil de communication externe.

8. Module de couplage (1) selon l'une quelconque des revendications précédentes, **caractérisé en ce que** le module de couplage (1) présente un agencement électronique qui est aménagé pour la surveillance d'un état de transmission d'énergie, et/ou d'un processus de transmission d'énergie.

9. Module de couplage (1) selon la revendication 4, **caractérisé en ce que** le module de couplage (1) présente un agencement électronique aménagé pour la commande du moyen d'actionnement (17).

10. Module de couplage (1) selon l'une quelconque des revendications précédentes, **caractérisé en ce que** le module de couplage (1) présente un appareil de chauffage (27) qui est aménagé pour le chauffage de l'appareil de protection (5) et/ou du logement d'enfichage (3).

11. Module de couplage (1) selon l'une quelconque des revendications précédentes, **caractérisé en ce que** le module de couplage (1) présente au moins un appareil étanche (31) qui est aménagé pour l'étanchéité d'un intérieur (33) du boîtier (7) lorsque l'appareil de protection (5) est agencé dans sa position fermée.

12. Véhicule automobile, avec un module de couplage (1) selon l'une quelconque des revendications 1 à 11, **caractérisé en ce que** le module de couplage (1) est agencé au niveau d'un côté inférieur du véhicule automobile.

13. Véhicule automobile selon la revendication 12, **caractérisé en ce que** le véhicule automobile est réalisé comme véhicule automobile entraîné au moins aussi électriquement, dans lequel le module de couplage (1) est aménagé pour la transmission d'énergie électrique dans le véhicule automobile ou depuis le véhicule automobile, dans lequel le logement d'enfichage (3) est relié activement à un appareil de charge du véhicule automobile, une alimentation en courant de bord du véhicule automobile, et/ou au moins un appareil de commande du véhicule automobile.

14. Système de transmission d'énergie pour la transmission d'énergie pour un véhicule automobile, avec un appareil de transmission d'énergie pour la transmission d'énergie dans un véhicule automobile ou depuis le véhicule automobile, qui présente un appareil de couplage qui est aménagé pour l'établissement d'une liaison active entre l'appareil de transmission d'énergie et un véhicule automobile pour la transmission d'énergie dans le véhicule automobile ou depuis le véhicule automobile, et avec un véhicule automobile selon l'une quelconque des revendications 12 et 13, dans lequel le module de couplage (1) du véhicule automobile est aménagé pour la liaison active avec l'appareil de couplage de l'appareil de transmission d'énergie, et dans lequel l'appareil de couplage est réalisé de manière librement déplaçable sous le véhicule automobile.
